# DEMANDE DE BREVET EUROPEEN

(11) **EP 2 199 126 A1**
(43) Date de publication de la demande: **23.06.2010**
(21) Numéro de dépôt: 09306259.4
(22) Date de dépôt: 18.12.2009
(51) Int. Cl.: B60J 3/02, B60J 7/00

(54) **Pare-soleil de véhicule automobile et véhicule correspondant**

(30) Priorité: 22.12.2008 FR 0858970
(71) Demandeur: Peugeot Citroën Automobiles Société Anonyme, 78140 Velizy Villacoublay (FR); Grupo Antolin France Sas, 78140 Velizy Villacoublay (FR)
(72) Inventeur: Rousseau, Frédéric, 78730, PONTHEVRARD (FR); Bernard, Vincent, 88650, ANOULD (FR); Richard, Stéphane, 88120, VAGNERY (FR)
(74) Mandataire: Blot, Philippe Robert Emile

(57) **Abrégé**

Ce pare-soleil (4) comprend une partie de support (16), une partie d'extension (18) mobile entre une position rétractée, une position déployée et une pluralité de positions intermédiaires, et un mécanisme de liaison (22) reliant la partie de support (16) et la partie d'extension (18), et guidant la partie d'extension (18). Le pare-soleil (4) comprend une première portion de toile d'occultation (26) et une deuxième portion de toile d'occultation (28) s'étendant en regard l'une de l'autre, et un enrouleur (32) pour enrouler et dérouler la première et la deuxième portions de toile d'occultation. Dans toutes les positions intermédiaires de la partie d'extension (18), la première portion de toile d'occultation (26) et la deuxième portion de toile d'occultation (28) s'étendent, entre la partie de support (16) et la partie d'extension (18), en regard l'une de l'autre et chacune en regard d'une face respective du mécanisme de liaison (22).

## Description

La présente invention concerne un pare-soleil de véhicule automobile, du type comprenant :
- une partie de support ;
- une partie d'extension mobile par rapport à la partie de support entre une position rétractée, une position déployée et une pluralité de positions intermédiaires;
- un mécanisme de liaison reliant la partie de support et la partie d'extension, et guidant la partie d'extension par rapport à la partie de support entre la position rétractée et la position déployée ;
- une première portion de toile d'occultation présentant une partie visible s'étendant, en position déployée de la partie d'extension, entre la partie de support et la partie d'extension ;
- une deuxième portion de toile d'occultation distincte de la première portion de toile d'occultation, la deuxième portion de toile d'occultation présentant une partie visible s'étendant, en position déployée de la partie d'extension, entre la partie de support et la partie d'extension, en regard de la partie visible de la première portion de toile d'occultation, le mécanisme de liaison s'étendant, en position déployée de la partie d'extension, entre la partie visible de la première portion de toile d'occultation et la partie visible de la deuxième portion de toile d'occultation ; et
- un enrouleur pour enrouler et dérouler la première portion de toile d'occultation et la deuxième portion de toile d'occultation autour de l'enrouleur en fonction de la position de la partie d'extension par rapport à la partie de support.

Le document FR-A-2 891 493 décrit un pare-soleil extensible muni d'une toile d'occultation. Le pare-soleil comprend une partie de support formée par une cassette, une partie d'extension formée par une barre de tirage et mobile par rapport à la partie de support entre une position rétractée, une position déployée et une pluralité de positions intermédiaires. Un mécanisme de liaison relie la partie de support et la partie d'extension, et guide la partie d'extension en translation par rapport à la partie de support entre la position rétractée et la position déployée. Un enrouleur est monté sur la partie de support pour enrouler et dérouler la toile d'occultation. La toile d'occultation chemine de part et d'autre du mécanisme de liaison en masquant les deux faces opposées du mécanisme de liaison. La toile d'occultation est fixée à une extrémité d'actionnement sur l'enrouleur. La toile d'occultation est fixée à une extrémité opposée d'ancrage sur la cassette, et montée glissante autour de la barre de tirage de telle sorte que le déplacement de la barre de tirage déroule et enroule la toile d'occultation.

Néanmoins, la toile, lors de son défilement génère des bruits de frottement, ce qui nuit à la qualité perçue du pare-soleil.

Un but de l'invention est d'améliorer la qualité perçue du pare-soleil.

A cet effet, l'invention a pour objet un pare-soleil du type précité,
**caractérisé en ce que** dans toutes les positions intermédiaires de la partie d'extension, la partie visible de la première portion de toile d'occultation et la partie visible de la deuxième portion de toile d'occultation s'étendent, entre la partie de support et la partie d'extension, en regard l'une de l'autre et chacune en regard d'une face respective du mécanisme de liaison.

Suivant des modes particuliers de réalisation, le pare-soleil selon l'invention comporte l'une ou plusieurs des caractéristiques suivantes, prise(s) isolément ou suivant l'une quelconque des combinaisons techniquement possibles :
- l'enrouleur est monté sur l'une de la partie de support et de la partie d'extension, la première portion de toile d'occultation et la deuxième portion de toile d'occultation comprenant chacune une extrémité d'actionnement s'enroulant autour de l'enrouleur et une extrémité opposée d'ancrage sur l'autre de la partie de support et de la partie d'extension ;
- l'extrémité d'ancrage de la première portion de toile d'occultation et l'extrémité d'ancrage de la deuxième portion de toile d'occultation sont solidaires l'une de l'autre ;
- l'extrémité d'ancrage de la première portion de toile d'occultation et l'extrémité d'ancrage de la deuxième portion de toile d'occultation sont montées glissantes sur ladite autre de la partie de support et de la partie d'extension ;
- l'extrémité d'actionnement de la première portion de toile d'occultation et l'extrémité d'actionnement de la deuxième portion de toile d'occultation sont solidaires l'une de l'autre ;
- l'extrémité d'actionnement de la deuxième portion de toile d'occultation est fixée sur la première portion de toile d'occultation, par exemple par soudage, l'extrémité d'actionnement de la première portion de toile d'occultation étant fixée sur l'enrouleur, par exemple par collage ;
- la partie visible de la première portion de toile d'occultation et la partie visible de la deuxième portion de toile d'occultation sont de couleur différente, l'une étant par exemple de couleur claire, l'autre étant par exemple de couleur sombre ;
- la première portion de toile d'occultation et la deuxième portion de toile d'occultation sont deux parties distinctes d'une même toile d'occultation ;
- la première portion de toile d'occultation et la deuxième portion de toile d'occultation sont deux toiles d'occultation distinctes ;
- l'extrémité d'ancrage de la première portion de toile d'occultation est fixée à l'extrémité d'ancrage de la deuxième portion de toile d'occultation, par exemple par soudage ; et
- l'enrouleur comprend une broche d'enroulement autour de laquelle chaque portion de toile d'occultation s'enroule, la broche d'enroulement présentant une échancrure de réception d'une extrémité d'actionnement d'au moins l'une de la première portion de toile d'occultation et de la deuxième portion de toile d'occultation, l'extrémité d'actionnement étant de préférence disposée dans l'échancrure de réception de telle sorte que la surface externe de l'extrémité d'actionnement (34) affleure avec le contour externe de la broche d'enroulement.

L'invention a également pour objet un véhicule automobile comprenant un pare-brise, un pavillon vitré, et un pare-soleil présentant une configuration d'occultation de la lumière provenant du pavillon vitré dans laquelle le pare-soleil s'étend en regard du pavillon vitré, et une configuration d'occultation de la lumière provenant du pare-brise dans laquelle le pare-soleil s'étend en regard du pare-brise, **caractérisé en ce que** le pare-soleil est tel que défini ci-dessus.

L'invention sera mieux comprise à la lecture de la description qui va suivre, donnée uniquement à titre d'exemple, et faite en se référant aux dessins annexés, sur lesquels :
- la Figure 1 est une vue schématique en coupe longitudinale d'une partie d'un véhicule automobile munie d'un pare-soleil extensible, selon l'invention ;
- la Figure 2 est une vue schématique en perspective du pare-soleil de la Figure 1, en configuration rétractée ;
- la Figure 3 est une vue analogue à la Figure 2 du pare-soleil en configuration déployée ; et
- la Figure 4 est une vue schématique en coupe suivant la ligne IV-IV de la Figure 3, et sur laquelle le miroir de courtoisie n'est pas représenté.

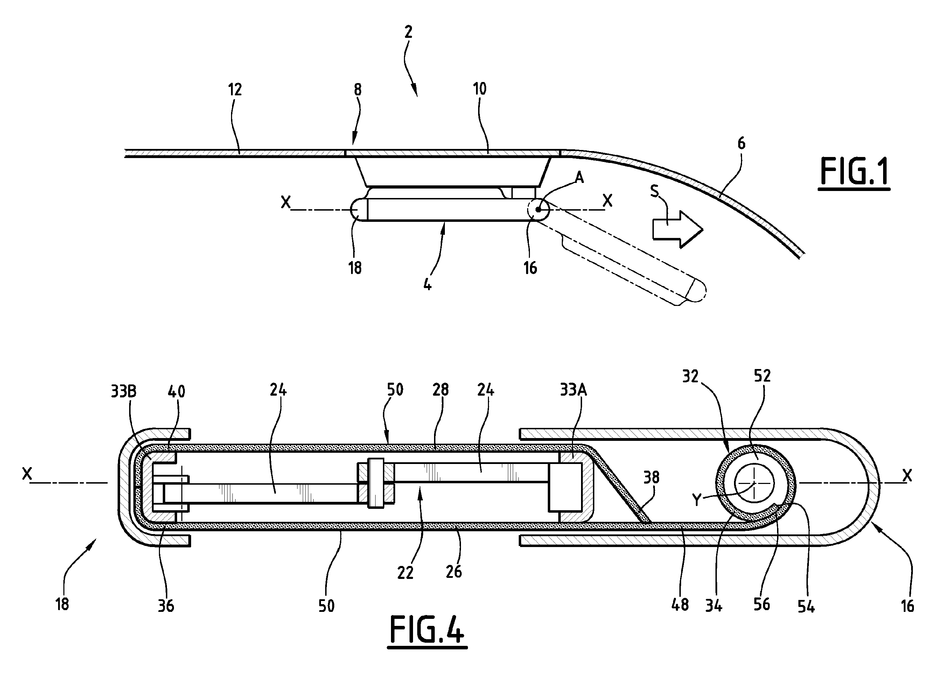

La Figure 1 illustre une partie d'un véhicule automobile 2 comprenant un pare-soleil 4 extensible.

Il est à noter que, dans toute la description, les termes « avant » et « arrière » s'entendent par référence à la direction de déplacement usuelle vers l'avant du véhicule 2, illustrée par une flèche S sur la Figure 1.

Le véhicule 2 comporte un pare-brise 6 et, en arrière, un toit 8 en partie transparent. Le toit 8 comporte une traverse avant 10 longeant le pare-brise 6 et un pavillon vitré 12 s'étendant en arrière de la traverse 10.

Le pare-soleil 4 est propre à assurer à la fois l'occultation de la lumière provenant du pare-brise 6, et celle de la lumière provenant du toit 8 du véhicule 2. Il est destiné au conducteur et/ou passager avant du véhicule 2.

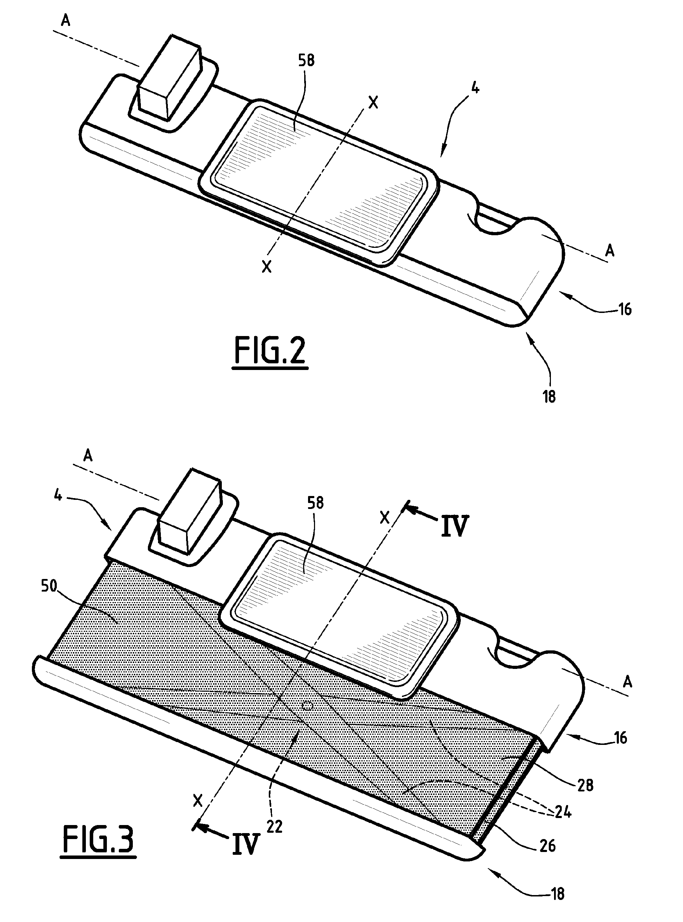

Le pare-soleil 4 est extensible entre une configuration rétractée (Figure 2) et une configuration déployée (Figure 3).

Le pare-soleil 4 est articulé à l'avant de la traverse 10 autour d'un axe horizontal A, entre une position accolée dans laquelle il est accolé à la traverse 10, et dans laquelle le pare-soleil 4 est sensiblement parallèle à la traverse 10 et appliqué contre la traverse 10 (Figure 1), une position d'occultation de la lumière provenant du pare-brise 6 dans laquelle le pare-soleil 4 s'étend en regard et de façon sensiblement parallèle au pare-brise 4, et une pluralité de positions intermédiaires.

La position accolée à la traverse 10 correspond, lorsque le pare-soleil 4 est en configuration rétractée, à une configuration de rangement du pare-soleil, et correspond, lorsque le pare-soleil 4 est en configuration déployée, à une configuration d'occultation de la lumière provenant du pavillon vitré 12, dans laquelle le pare-soleil 4 s'étend en regard et de façon sensiblement parallèle au pavillon vitré 14.

Dans la position d'occultation de la lumière provenant du pare-brise 6, le pare-soleil 4 s'étend en avant de la traverse 10. Cette position correspond à une configuration d'occultation de la lumière provenant du pare-brise 6.

Comme illustré sur les Figures 2 et 3, le pare-soleil 4 comprend une partie de support 16 articulée sur la traverse 10 autour de l'axe A, et une partie d'extension 18. La partie d'extension 18 est mobile en translation par rapport à la partie de support 16 entre une position rétractée (Figure 2) correspondant à la configuration rétractée du pare-soleil 4, une position déployée (Figure 3) correspondant à la configuration déployée du pare-soleil 4, et une pluralité de positions intermédiaires. Un mécanisme de liaison 22 relie la partie de support 16 et la partie d'extension 18, et guide la partie d'extension 18 entre la position rétractée et la position déployée, suivant une direction de translation X-X perpendiculaire à l'axe A (Figures 1 à 3).

Deux toiles d'occultation 26, 28 s'étendent entre la partie de support 16 et la partie d'extension 18, de part et d'autre du mécanisme de liaison 22 (Figure 4).

Les toiles d'occultation 26 et 28 s'enroulent sur un enrouleur 32 monté à l'intérieur de la partie de support 16.

La partie de support 16 et la partie d'extension 18 forment chacune une demi-coque ouverte l'une vers l'autre. En position rétractée de la partie d'extension 18, la partie de support 16 et la partie d'extension 18 forment une coque fermée contenant le mécanisme de liaison 22 et les toiles d'occultation 26, 28.

La partie de support 16 est plus large, suivant la direction X-X, que la partie d'extension 18. Elle est munie d'un miroir de courtoisie 58.

La partie d'extension 18 est adaptée pour être saisie par l'utilisateur. Dans l'exemple illustré, elle a une forme générale de barre et présente une largueur suivant la direction X-X de quelques centimètres.

Le mécanisme de liaison 22 est, dans l'exemple illustré, réalisé au moyen de deux bras 24 articulés l'un sur l'autre en leur milieu et articulés chacun à une extrémité respective à un rail de support 33A solidaire de la partie de support 16 et à un rail d'extension 33B solidaire de la partie d'extension 18.

Le rail de support 33A et le rail d'extension 33B sont des profilés en forme du U ouverts l'un vers l'autre. Ils s'étendent suivant la longueur du pare-soleil, c'est-à-dire perpendiculairement à la direction de translation X-X.

L'une des extrémités de chaque bras 24 est articulée purement rotative sur le rail de support 33A pour le premier bras 24 et sur le rail d'extension 33B pour le deuxième bras 24, tandis que l'autre extrémité est articulée rotative coulissante sur le rail opposé respectif 33B, 33A.

Les bras 24 sont de longueurs égales et leurs extrémités forment à tout moment un rectangle.

La position rétractée, la position déployée et toutes les positions intermédiaires sont stables, du fait de frottements générés volontairement par le mécanisme de liaison 22 pour contrer l'action de l'enrouleur 32, de la gravité, et de l'inertie de la partie d'extension 18. Ces frottements sont par exemple générés par une bague élastomère disposée entre les deux bras 24, autour de l'axe d'articulation entre les deux bras 24.

On pourra par exemple se reporter à la demande FR 07 54547.

La première toile d'occultation 26 est la plus longue. Elle comprend une extrémité d'actionnement 34 fixée sur l'enrouleur 32, et une extrémité opposée d'ancrage 36 sur la partie d'extension 18.

La deuxième toile d'occultation 28 comprend, quant à elle, une extrémité d'actionnement 38 fixée sur la première toile d'occultation 26 et une extrémité opposée d'ancrage 40 sur la partie d'extension 18.

L'extrémité d'actionnement 38 est fixée sur la première toile 26 à proximité de l'extrémité d'actionnement 34 de la première toile d'occultation 26.

La fixation entre les deux toiles 26, 28 est par exemple réalisée par soudure.

En variante néanmoins, les extrémités d'actionnement 34, 38 des deux toiles d'occultation 26, 28 sont fixées sur l'enrouleur 32.

Les deux toiles d'occultation 26 et 28, de part leur rayon d'enroulement différent (chacune est sur un rayon différent d'une épaisseur de l'autre) ont des mouvements d'extension légèrement différents. Pour cette raison, les extrémités d'ancrage 36, 40 des deux toiles 26, 28 sont soudées l'une à l'autre et montées glissantes sur et autour du rail d'extension 33B.

Les deux toiles 26 et 28 sont ainsi ancrées sur le rail d'extension 33B. Les extrémités d'ancrage 36, 40 sont, lors du déplacement de la partie d'extension 18, tirées par le rail 33B et suivent sensiblement le mouvement de translation de la parti d'extension 18 suivant la direction X-X. Au mouvement de translation des extrémités d'ancrage 36, 40 se combine un léger mouvement de glissement autour du rail 33B.

En variante, les toiles 26, 28 peuvent bien entendu être montées glissantes autour d'un autre élément allongé solidaire de la partie d'extension 18, même si le montage autour du rail 33B du mécanisme de liaison 22 présente l'avantage de simplifier le pare-soleil 4 et de réduire son coût de fabrication.

Les toiles 26 et 28 glissent également sur le rail de support 33A, de part et d'autre de ce dernier. Le rail 33A assure ainsi le guidage des toiles 26 et 28 à leur entrée et sortie de la partie de support 16.

La deuxième toile d'occultation 28 est fixée à la première toile avec un pré-tensionnement suffisant pour que les deux toiles 26, 28 soient sous tension dans toutes les positions de la partie d'extension 18. Les deux toiles 26 et 28 sont ainsi, dans toutes les configurations du pare-soleil 4, étirées élastiquement par rapport à un état de repos sans tension, par exemple d'environ 10%.

La première toile d'occultation 26 est de couleur sombre tandis que la deuxième toile d'occultation 28 est de couleur claire, de préférence de la même couleur que l'habitacle.

Chaque toile 26, 28 présente une partie visible 50 s'étendant, en position déployée, entre la partie de support 16 et la partie d'extension 18.

En position déployée et dans toutes les positions intermédiaires, les parties visibles 50 des deux toiles 26, 28 s'étendent en regard l'une de l'autre, de façon parallèle. La partie 50 de chaque toile 26, 28 est, en position déployée, plane.

En position rétractée, les toiles 26, 28 ne sont pas visibles.

Les toiles d'occultation 26, 28 sont par exemple réalisées en tissu PolyEthylène (PE) enduit de PolyUréthane (PU), structure permettant d'obtenir un tissu souple, fin, silencieux et permettant une occultation totale de la lumière.

L'enrouleur 32 comprend une broche d'enroulement 52 monté rotative dans la partie de support 16 autour d'un axe YY perpendiculaire à la direction de translation XX et parallèlement à l'axe A, et un ressort de torsion non représenté.

La broche d'enroulement 52 comporte une échancrure 54 de réception de l'extrémité d'actionnement 34 de la première toile d'occultation 26. Cette échancrure 54 forme un évidement cylindrique dont la génératrice est parallèle à l'axe YY et dont le contour en section transversale comprend un angle droit pénétrant l'épaisseur de la broche 52.

Le contour externe de la broche d'enroulement 52 a ainsi une section en forme de spirale.

L'échancrure 54 est ménagée sur sensiblement toute la longueur du tube d'enroulement 52.

La broche est, dans l'exemple illustré, creuse, en forme de tube, pour réduire son poids.

D'une manière générale, l'échancrure 54 est configurée de telle sorte que la surface externe de l'extrémité d'actionnement 34 de la toile d'occultation 26 affleure avec le contour externe de la broche d'enroulement 52.

L'extrémité d'enroulement 38 définit ainsi une rampe 56 inclinée radialement par rapport à l'axe YY, entre le contour externe de la broche d'enroulement 52 et le contour externe de la première épaisseur d'enroulement de la première toile d'occultation 26. La rampe 56 est tangente au contour externe de la broche d'enroulement 52.

Le fonctionnement du pare-soleil 4 selon l'invention va maintenant être décrit.

En configuration de rangement, le pare-soleil 4 est dans la position accolée contre la traverse 6 et la partie d'extension 18 dans la position rétractée.

Pour se protéger de la lumière provenant du pavillon vitré 12, l'utilisateur déplace la partie d'extension 18 jusqu'à la position déployée, tout en laissant le pare-soleil 4 dans la position accolée contre la traverse 10. Le pare-soleil 4 définit alors une surface d'occultation horizontale s'étendant en arrière de la traverse 10.

Pour se protéger de la lumière provenant du pare-brise 6, l'utilisateur déplace le pare-soleil 4 en rotation autour de son axe A, vers l'avant, de façon à ce que la partie de support 16 et la partie d'extension 18 s'étendent en avant de la traverse 10, en regard du pare-brise 2.

En fonction de la surface d'occultation souhaitée, l'utilisateur éloigne plus ou moins la partie d'extension 18 de la partie de support 16 jusqu'à la position déployée ou l'une des positions intermédiaires.

L'invention présente de nombreux avantages.

Le mouvement de glissement des toiles 26 et 28 étant très faible, il est possible de souder les deux toiles 26, 28 ensemble dans la zone de glissement sans courir le risque de voir apparaître la zone de soudure lors des mouvements d'extension et de rétraction, cette soudure restant cantonnée dans la zone non visible de glissement sur le rail 33B. Les deux toiles peuvent ainsi être de couleurs différentes tout en s'enroulant sur le même enrouleur.

La couleur de la toile d'occultation 26, 28 peut être choisie indépendamment de chaque côté du mécanisme de liaison 22. L'aspect esthétique du pare-soleil peut ainsi être adapté pour se fondre avec les éléments environnants, ce qui améliore l'effet visuel produit.

En outre, les frottements générés par les toiles d'occultation 26, 28 sont faibles, ce qui limite des effets indésirables tel que le bruit généré par les frottements.

Le contour de la broche d'enroulement 52 de l'enrouleur 32 assure un enroulement avec une déformation uniforme et douce de la toile d'occultation 26, de façon à éviter la formation de plis sur les toiles 26, 28. L'aspect esthétique des toiles 26, 28 dans le temps est ainsi préservé.

En outre, le pare-soleil est de conception simple, avec un nombre faible de composants, et notamment un unique enrouleur et une unique barre de guidage.

En variante, les différences d'aspect entre les toiles d'occultation 26, 28 ne concernent pas seulement la couleur, mais par exemple aussi la transparence, le matériau, etc.

En variante également, le pare-soleil 4 est muni d'un mécanisme de liaison 22 de tout type adapté, par exemple de quatre bras engrenés entre eux à leurs extrémités.

En variante encore, le toit 8 du véhicule 2 n'est pas transparent et ne comporte ni traverse 10, ni pavillon vitré 12. Le pare-soleil 4 est alors par exemple monté sur des composants d'habillage du toit 8. Il peut être utilisé pour occulter le pare-brise du véhicule lorsque celui-ci est à l'arrêt, afin de limiter l'échauffement de l'habitacle.

La fixation de la deuxième toile 28 sur la première toile 26, plutôt que sur l'enrouleur 32, réduit l'épaisseur de toile enroulée autour de l'enrouleur 32.

En variante, le pare-soleil 4 est disposé à l'arrière du véhicule.

Dans une variante de réalisation de l'invention, les deux toiles 26 et 28 sont venues de matière au niveau des extrémités d'ancrage 36 et 40. Le pare-soleil 4 comprend alors une unique toile soudée sur elle-même au niveau de l'extrémité 38. L'unique toile forme alors les deux portions de toile 26 et 28. La toile sera alors d'une couleur unique mais le coût de fabrication par rapport à un pare-soleil 4 avec deux toiles est réduit.

## Revendications

1. Pare-soleil (4) de véhicule automobile (2), du type comprenant :
- une partie de support (16) ;
- une partie d'extension (18) mobile par rapport à la partie de support (16) entre une position rétractée, une position déployée et une pluralité de positions intermédiaires;
- un mécanisme de liaison (22) reliant la partie de support (16) et la partie d'extension (18), et guidant la partie d'extension (18) par rapport à la partie de support (16) entre la position rétractée et la position déployée ;
- une première portion de toile d'occultation (26) présentant une partie visible (50) s'étendant, en position déployée de la partie d'extension (18), entre la partie de support (16) et la partie d'extension (18) ;
- une deuxième portion de toile d'occultation (28) distincte de la première portion de toile d'occultation (26), la deuxième portion de toile d'occultation (28) présentant une partie visible (50) s'étendant, en position déployée de la partie d'extension (18), entre la partie de support (16) et la partie d'extension (18), en regard de la partie visible (50) de la première portion de toile d'occultation (26), le mécanisme de liaison (22) s'étendant, en position déployée de la partie d'extension (18), entre la partie visible (50) de la première portion de toile d'occultation (26) et la partie visible (50) de la deuxième portion de toile d'occultation (28) ; et
- un enrouleur (32) pour enrouler et dérouler la première portion de toile d'occultation (26) et la deuxième portion de toile d'occultation (28) autour de l'enrouleur (32) en fonction de la position de la partie d'extension (18) par rapport à la partie de support (16),
**caractérisé en ce que** dans toutes les positions intermédiaires de la partie d'extension (18), la partie visible (50) de la première portion de toile d'occultation (26) et la partie visible (50) de la deuxième portion de toile d'occultation (28) s'étendent, entre la partie de support (16) et la partie d'extension (18), en regard l'une de l'autre et chacune en regard d'une face respective du mécanisme de liaison (22).

2. Pare-soleil (4) de véhicule automobile (2) selon la revendication 1, dans lequel l'enrouleur (32) est monté sur l'une de la partie de support (16) et de la partie d'extension (18), la première portion de toile d'occultation (26) et la deuxième portion de toile d'occultation (28) comprenant chacune une extrémité d'actionnement (34, 38) s'enroulant autour de l'enrouleur (32) et une extrémité opposée d'ancrage (36, 40) sur l'autre de la partie de support (16) et de la partie d'extension (18).

3. Pare-soleil (4) de véhicule automobile (2) selon la revendication 2, dans lequel l'extrémité d'ancrage (36) de la première portion de toile d'occultation (26) et l'extrémité d'ancrage (40) de la deuxième portion de toile d'occultation (28) sont solidaires l'une de l'autre.

4. Pare-soleil (4) de véhicule automobile (2) selon la revendication 2 ou 3, dans lequel l'extrémité d'ancrage (36) de la première portion de toile d'occultation (26) et l'extrémité d'ancrage (40) de la deuxième portion de toile d'occultation (28) sont montées glissantes sur ladite autre de la partie de support (16) et de la partie d'extension (18).

5. Pare-soleil (4) de véhicule automobile (2) selon l'une quelconque des revendications 2 à 4, dans lequel l'extrémité d'actionnement (34) de la première portion de toile d'occultation (26) et l'extrémité d'actionnement (38) de la deuxième portion de toile d'occultation (28) sont solidaires l'une de l'autre.

6. Pare-soleil (4) de véhicule automobile (2) selon la revendication 5, dans lequel l'extrémité d'actionnement (38) de la deuxième portion de toile d'occultation (28) est fixée sur la première portion de toile d'occultation (26), par exemple par soudage, l'extrémité d'actionnement (34) de la première portion de toile d'occultation (26) étant fixée sur l'enrouleur (32), par exemple par collage.

7. Pare-soleil (4) de véhicule automobile (2) selon l'une quelconque des revendications précédentes, dans lequel la partie visible (50) de la première portion de toile d'occultation (26) et la partie visible (50) de la deuxième portion de toile d'occultation (28) ont une couleur différente l'une de l'autre, l'une étant par exemple de couleur claire, l'autre étant par exemple de couleur sombre.

8. Pare-soleil (4) de véhicule automobile (2) selon l'une quelconque des revendications précédentes, dans lequel la première portion de toile d'occultation (26) et la deuxième portion de toile d'occultation (28) sont deux parties distinctes d'une même toile d'occultation.

9. Pare-soleil (4) de véhicule automobile (2) selon l'une quelconque des revendications 1 à 7, dans lequel la première portion de toile d'occultation (26) et la deuxième portion de toile d'occultation (28) sont deux toiles d'occultation distinctes.

10. Pare-soleil (4) de véhicule automobile (2) selon la revendication 9 prise ensemble avec la revendication 2, dans lequel l'extrémité d'ancrage (36) de la première portion de toile d'occultation (26) est fixée à l'extrémité d'ancrage (40) de la deuxième portion de toile d'occultation (28), par exemple par soudage.

11. Pare-soleil (4) de véhicule automobile (2) selon l'une quelconque des revendications précédentes, dans lequel l'enrouleur (32) comprend une broche d'enroulement (52) autour de laquelle chaque portion de toile d'occultation (26, 28) s'enroule, la broche d'enroulement (52) présentant une échancrure (54) de réception d'une extrémité d'actionnement (34, 38) d'au moins l'une de la première portion de toile d'occultation (26) et de la deuxième portion de toile d'occultation (28), l'extrémité d'actionnement (34, 38) étant de préférence disposée dans l'échancrure de réception (54) de telle sorte que la surface externe de l'extrémité d'actionnement (34, 38) affleure avec le contour externe de la broche d'enroulement (52).

12. Véhicule automobile (2) comprenant un pare-brise (6), un pavillon vitré (12), et un pare-soleil (4) présentant une configuration d'occultation de la lumière provenant du pavillon vitré (12) dans laquelle le pare-soleil (4) s'étend en regard du pavillon vitré (12), et une configuration d'occultation de la lumière provenant du pare-brise (16) dans laquelle le pare-soleil s'étend en regard du pare-brise (6), **caractérisé en ce que** le pare-soleil (4) est selon l'une quelconque des revendications précédentes.
